(19) Europäisches Patentamt
European Patent Office
Office européen des brevets

(11) Numéro de publication: **0 014 153**
**A1**

(12) # DEMANDE DE BREVET EUROPEEN

(21) Numéro de dépôt: **80400110.5**

(22) Date de dépôt: **23.01.80**

(51) Int. Cl.³: **A 01 F 25/20**, B 60 P 1/36, B 60 P 1/38

(30) Priorité: **29.01.79 FR 7902184**

(43) Date de publication de la demande: **06.08.80 Bulletin 80/16**

(84) Etats contractants désignés: **AT BE CH DE GB IT LU NL SE**

(71) Demandeur: **Société dite: S.A. AUDUREAU, La Copechagniere, F-85260 L'Herbergement (Vendée) (FR)**

(72) Inventeur: **Audureau, Bernard, La Copechagnière, F-85260 L'Herbergement (Vendée) (FR)**

(74) Mandataire: **Ducas, Michel et al, Cabinet Boettcher 23, rue La Boétie, F-75008 Paris (FR)**

(54) **Appareil de reprise, transport et distribution de matériaux.**

(57) L'invention concerne un appareil tractable ou portable par véhicule pour la reprise, le transport et la distribution de matériaux et/ou produits foisonnants, tels les fourrages. Une benne 1, au fond de laquelle est disposée un transporteur 3 de déversement transversal au sens de déplacement du véhicule, présente, du côté opposé au véhicule, une paroi mobile pouvant servir de pelle racleuse montée à l'extrémité d'un bras articulé et extensible.

40
34
32
1
12
12
35
11
9
39
8
10
30
36
5
4
6
3
5

EP 0 014 153 A1

L'invention a pour objet un appareil de reprise, transport et distribution de matériaux comportant une benne dont une paroi est une paroi mobile, pouvant servir de pelle racleuse à attaque verticale ou oblique, disposée pivotante à l'extrémité d'un bras articulé.

De tels appareils sont connus, notamment dans l'agriculture, pour désiler, transporter et distribuer des produits. Ces appareils sont portés par un tracteur, un chariot élévateur ou tractés. Les moyens d'action sur le bras articulé et sur la paroi mobile sont généralement des vérins hydrauliques.

Mais, lorsqu'on a à charger des matériaux ou produits très foisonnants, le mouvement de pivotement de la paroi mobile peut ne pas être suffisant pour tasser ces matériaux ou produits dans la benne pour obtenir un chargement optimal. De tels inconvénients se produisent, par exemple, lors du chargement de fourrages ou de paille.

Le but de l'invention est d'éviter ces inconvénients en offrant la possibilité de tasser au maximum des matériaux ou produits foisonnants pendant qu'on les charge.

Ce but est atteint, selon l'invention, par un appareil de reprise, transport et distribution de matériaux et/ou produits foisonnants, comportant une benne, tractable ou portable à l'avant ou à l'arrière d'un véhicule, au fond de laquelle est disposé un transporteur de déversement dirigé transversalement au sens de déplacement du véhicule, ladite benne présentant, du côté opposé au véhicule, une paroi mobile, pouvant servir de pelle racleuse à attaque verticale ou oblique, disposée pivotante à l'extrémité d'un bras articulé, grâce au fait que le bras articulé est extensible, de préférence par le moyen d'un vérin à double effet.

D'autres caractéristiques et avantages ressortiront de la description qui sera donnée ci-après uniquement à titre d'exemple d'un mode de réalisation de l'invention. On se reportera, à cet effet, aux dessins annexés, dans lesquels :

- La figure 1 est une coupe longitudinale selon I de la figure 2 d'un appareil selon l'invention, dont on a enlevé le bras,

- la figure 2 est une coupe transversale selon II de la figure 1 du même appareil avec le bras extensible en position haute et allongée avec coupe partielle de ce bras,

- la figure 3 est également une coupe transversale selon II de la figure 1 du même appareil, mais avec le bras extensible en position basse courte en trait plein et en position basse allongée en trait interrompu.

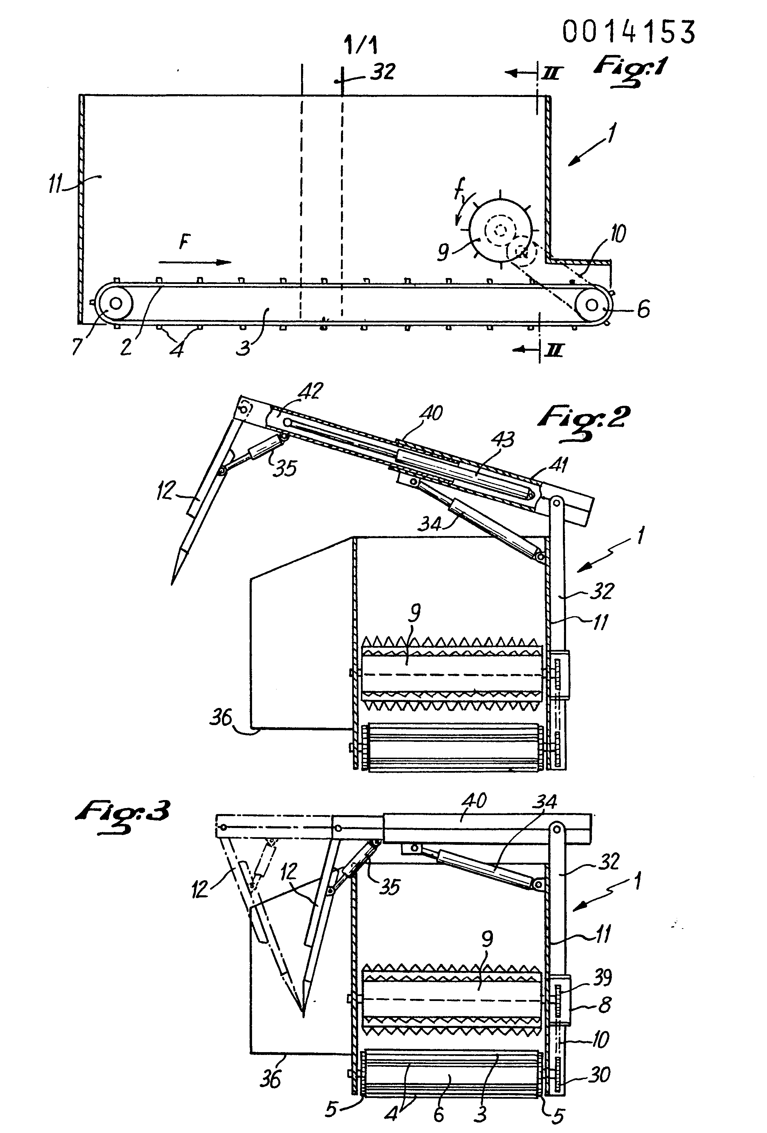

Une benne tractée ou portée, désignée dans son ensemble par 1, comporte dans son fond 2 un transporteur 3 à raclettes 4 entraînées par des chaînes 5 d'entraînement sans fin autour de deux tambours 6 et 7. Le tambour 6 est entraîné, comme il est connu en soi, par un moteur hydraulique 8 au moyen d'un ensemble constitué par une chaîne 10 et deux pignons dentés 29 et 30. Le moteur hydraulique 8, qui entraîne le pignon denté 29, entraîne également un tambour 9 démêleur ou déchiqueteur disposé au voisinage du point de déversement, à droite sur la figure 1, du transporteur 3.

Une des parois latérales, 12, de la benne est une paroi mobile pouvant servir de pelle racleuse à attaque verticale de haut en bas. Elle est montée pivotante à l'extrémité d'un bras 40 monté articulé à l'extrémité 33 d'un montant central 32 de la paroi latérale 11 opposée à la paroi 12.

Conformément à l'invention le bras 40 est extensible. Il est constitué par deux parties tubulaires 41 et 42 montées télescopiquement et il est allongeable ou raccourcissable grâce à un vérin 43, visible à la figure 2.

Le mouvement d'articulation de la paroi 12 est commandé par deux vérins 34 et 35 permettant de l'amener, depuis une position haute, représentée à la figure 2, à la position de paroi, représentée à la figure 3, après qu'elle ait abattu, le cas échéant, en position intermédiaire et raclé les matériaux ou produits d'un tas ou d'un silo en les amenant sur un seuil de déversement 36 sur le transporteur 3. A cet effet le vérin 34 est lié articulé à la partie 41 du bras 40 et prend par ailleurs appui en 38 sur la paroi 11, tandis que le vérin 35 commande l'articulation de la pelle racleuse 12 servant de paroi mobile en prenant appui par ailleurs sur la partie 42 du bras 40. Le transporteur 3 assure le transport des matériaux ou produits dans le sens de la flèche F de la figure 1 et, grâce à un pignon de renvoi interposé, le tambour 9 tourne dans le sens de la flèche f de la figure 1, de préférence à une vitesse périphérique plus grande que la vitesse linéaire du transporteur, pour accélérer le déstockage des produits emmêlés ou agglutinés.

Pour attaquer un tas ou une matière en silo, on part de la position de la figure 2, c'est-à-dire avec le bras 40 allongé, puis on abat ce bras et par des mouvements combinés de pivotement de la paroi 12 commandé par le vérin 35 et de raccourcissement du bras 40 commandé par le vérin 43, on charge et tasse la matière dans la benne, comme on le comprend par la figure 3.

De cette façon on est assuré de remplir au mieux la benne 1, de façon à ce que toute la charge se trouve au-dessus du transporteur 3.

REVENDICATIONS

1) Appareil de reprise, transport et distribution de matériaux et/ou produits foisonnants, comportant une benne (1), tractable ou portable à l'avant ou à l'arrière d'un véhicule, au fond de laquelle est disposé un transporteur (3) de déversement dirigé transversalement au sens de déplacement du véhicule, ladite benne (1) présentant, du côté opposé au véhicule, une paroi mobile (12), pouvant servir de pelle racleuse à attaque verticale ou oblique, disposée pivotante à l'extrémité d'un bras articulé (40), caractérisé en ce que le bras articulé (40) est extensible.

2) Appareil selon la revendication 1, caractérisé en ce que le bras (40) est commandé en extension et en rétraction par un vérin à double effet (43).

0014153

1/1

Fig:1
32
II
1
11
$f_v$
10
9
F
6
7
2
4
3
II
Fig:2
42
40
43
35
41
12
34
1
32
9
11
36
Fig:3
40
34
32
12
12
35
1
11
9
39
8
10
36
30
5
4
6
3
5

0014153

Office européen des brevets

# RAPPORT DE RECHERCHE EUROPEENNE

Numéro de la demande
EP 80 40 0110

## DOCUMENTS CONSIDERES COMME PERTINENTS

| Catégorie | Citation du document avec indication, en cas de besoin, des parties pertinentes | Revendication concernee |
|---|---|---|
| | US - A - 2 768 760 (J.S. PILCH)<br>* Colonne 1, lignes 64-72; colonne 2, lignes 1-52; colonne 3, lignes 27-29; figure 1 *<br>-- | 1,2 |
| | FR - A - 2 189 297 (K. MENGELE & SÖHNE MASCHINENFABRIK UND EISENGIESSEREI)<br>* Page 1, lignes 5-9; page 5, lignes 3-4; figure 3 *<br>---- | 1 |

CLASSEMENT DE LA DEMANDE (Int. Cl.)

A 01 F 25/20
B 60 P 1/36
1/38

DOMAINES TECHNIQUES RECHERCHES (Int. Cl.)

B 60 P
B 65 G
A 01 F

CATEGORIE DES DOCUMENTS CITES

X: particulièrement pertinent
A: arrière-plan technologique
O: divulgation non-ecrite
P: document intercalaire
T: théorie ou principe à la base de l'invention
E: demande faisant interférence
D: document cité dans la demande
L: document cite pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 28-04-1980 | CAPRARI |